# FASCICULE DE BREVET EUROPEEN

(11) **EP 0 536 021 B1**
(45) Date de publication et mention de la délivrance du brevet: **05.07.1995**
(21) Numéro de dépôt: 92402612.3
(22) Date de dépôt: 23.09.1992
(51) Int. Cl.: B01D 61/44, C08J 11/02

(54) **Récupération des solvants polaires aprotiques à partir de leurs solutions aqueuses salines**
Wiedergewinnung von polaren aprotischen Lösungsmitteln aus ihren wässrigen Salzlösungen
Recovery of aprotic polar solvents from saline aqueous solutions thereof

(30) Priorité: 02.10.1991 FR 9112135
(43) Date de publication de la demande: 07.04.1993
(73) Titulaire: SOCIETE NATIONALE ELF AQUITAINE (PRODUCTION), 92400 Courbevoie (FR)
(72) Inventeur: Gongora, Henri, F-64050 Billere (FR); Orozco, Jose-Luis, F-64140 Lons (FR)
(74) Mandataire: Leboulenger, Jean

(56) Documents cités:
- EP-A- 0 381 134
- CS-B- 169 049

## Description

La présente invention concerne le domaine des solvants polaires aprotiques à point d'ébullition supérieur à celui de l'eau tels que le diméthylsulfoxyde (DMSO), la N-méthyl-pyrrolidone (NMP) et le diméthylformamide (DMF).

Ces solvants sont utilisés industriellement en grandes quantités, notamment comme milieux réactionnels pour la synthèse de composés organiques, comme solvants pour la fabrication et la mise en oeuvre de polymères, et dans l'extraction de produits pétroliers. Dans la plupart de ces applications, le solvant polaire aprotique se retrouve généralement sous forme de solutions aqueuses souvent riches en sels minéraux dissous (jusqu'à 10 % en poids).

Pour des raisons d'économie et surtout pour la sauvegarde de l'environnement, il est particulièrement souhaitable de traiter ces solutions aqueuses pour récupérer le solvant polaire aprotique sous une forme suffisamment pure de façon à permettre sa réutilisation.

Lorsqu'on désire récupérer et purifier un solvant polaire aprotique à partir de ses solutions aqueuses, la distillation est la technique la plus couramment utilisée. Cependant, cette technique n'est pas directement applicable aux solutions aqueuses salines de solvants polaires aprotiques à point d'ébullition supérieur à celui de l'eau. En effet, au fur et à mesure de l'évaporation de l'eau plus volatile, les sels généralement peu solubles dans le solvant polaire aprotique peuvent générer des conditions de distillation dangereuses en cristallisant de façon intempestive dans le bouilleur. Ainsi, lorsqu'on a affaire à une solution aqueuse saline, il est absolument indispensable de procéder au préalable à son dessalement.

La méthode de dessalement, usuellement pratiquée, consiste à traiter préalablement la solution aqueuse saline dans un évaporateur à film mince où le solvant polaire aprotique et l'eau subissent une évaporation flash et sont ensuite entraînés, exempts de sels, vers la colonne à distiller. Cette méthode présente toutefois les inconvénients suivants :
- risques de décomposition du solvant polaire aprotique au contact des parois surchauffées de l'évaporateur,
- perte fatale de solvant par entraînement avec les sels en pied de l'appareil,
- fonctionnement délicat en raison de l'épaisseur de la couche de sel qui doit toujours être maintenue au minimum afin de ne pas endommager le dispositif de raclage (pales, moteur),
- coût d'investissement et coût énergétique élevés.

Une autre technique permettant l'élimination des sels avant distillation est l'électrodialyse. Par rapport à la technique précédente, l'électrodialyse présente les avantages suivants :
- elle peut procèder à température ambiante ou peu élevée (jusqu'à 60°C) et ne risque donc pas d'altérer les produits,
- elle permet de récupérer plus de 98 % du solvant polaire aprotique introduit et de séparer totalement les sels, en fournissant, d'une part un effluent aqueux concentré en sels et exempt de solvant et, d'autre part, une solution aqueuse enrichie en solvant polaire aprotique et traitable par distillation ou toute autre technique séparative adaptée,
- elle est économique tant du point de vue de l'investissement que des dépenses de fonctionnement,
- elle est utilisable en mode continu ou discontinu,
- elle présente enfin une bonne sécurité d'emploi.

L'application de l'électrodialyse à des mélanges eau-DMSO -NaNO₃ a déjà été décrite dans le brevet tchécoslovaque 169 049. Dans ce cas l'électrodialyse se déroule sans problème particulier. Il n'en est cependant plus de même lorsqu'on a affaire à des solutions aqueuses basiques contenant des cations multivalents, tels que Zn²⁺, solubilisés sous forme de complexes et susceptibles de précipiter en milieu basique sous forme d'hydroxydes insolubles. On observe dans ce cas une basification des compartiments "saumure" de l'électrodialyseur et une précipitation du zinc dans ce milieu. Ce précipité colmate le faible espace intermembranaire et empêche alors la circulation de la saumure, nécessaire au fonctionnement de l'électrodialyseur.

La EP-A-0381134 décrit le désalage de solvants organiques par électrodialyse et prescrit le rinçage des électrodes avec une solution d'un sel alcalin d'un acide organique ne contenant pas d'ions sulfates.

Il a maintenant été trouvé qu'on peut résoudre ce problème si, durant l'électrodialyse, on maintient la saumure à un pH acide. Contrairement à toute attente, il a été constaté que l'acidification de la saumure pour éviter la précipitation d'hydroxydes de métaux tels que le zinc ne s'accompagne pas d'une acidification de la solution basique à dessaler et n'a pas d'effet néfaste sur la résistivité du système ou sur la stabilité du DMSO (pas de décomposition en diméthylsulfure malodorant).

La présente invention a donc pour objet un procédé de récupération d'un solvant polaire aprotique à partir d'une solution aqueuse saline basique de ce solvant, consistant à dessaler ladite solution par électrodialyse et ensuite à distiller la solution dessalée, ce procédé étant caractérisé en ce que, durant l'étape d'électrodialyse, on maintient le pH de la saumure à une valeur comprise entre 1 et 7.

Le procédé selon l'invention s'applique plus particulièrement au traitement de solutions comprenant en poids de 0,5 à 80 % de solvant polaire aprotique, de 20 à 99,5 % d'eau et jusqu'à 10 % de sels minéraux dissous, en particulier des sels de Zinc tels que, par exemple, l'acétate. Le caractère basique de ces solutions (pH 7 à 12) est généralement dû à la présence d'une base capable de former des complexes solubles avec les cations métalliques (par exemple, l'ammoniac avec Zn). En plus de ces constituants, les solutions à dessaler peuvent également contenir des sels non métalliques et/ou des composés organiques ioniques ou non.

La saumure utilisée pour l'électrodialyse est généralement constituée par de l'eau ou de l'eau salée, les sels pouvant provenir de la solution à traiter. Son maintien à pH acide conformément au procédé selon l' invention peut être réalisé en lui ajoutant régulièrement, de façon continue ou périodique, un acide minéral.

Comme acide, on utilise de préférence l'acide chlorhydrique, mais on ne sortirait pas du cadre de la présente invention en employant un autre acide minéral, par exemple HNO₃, H₂SO₄, H₃PO₄. La concentration de l'acide utilisé est sans importance, mais il est plus commode d'utiliser un acide assez concentré (par exemple HCl 33 %).

La quantité d'acide à a jouter à la saumure dépend de nombreux facteurs, en particulier du pH assurant une bonne solubilité des sels métalliques. Un pH trop bas pouvant nuire au rendement énergétique, il est préférable de se placer au pH acide le plus élevé possible qui évite un disfonctionnement (encrassement des séparateurs de membranes ou augmentation de la résistivité des membranes).

L'acide peut être introduit dans le circuit saumure en un ou plusieurs endroits, par exemple dans la cuve ou dans le circuit de recirculation de la saumure.

Le réglage du pH de la saumure entre 1 et 7 permet généralement d'éviter la précipitation d'hydroxydes de métaux tels que le zinc. Cependant, pour chaque cation métallique, il existe une zone de pH optimale qu'on peut déterminer par des tests préalables et dont la valeur dépend du produit de solubilité de l'hydroxyde métallique et de la perte de charge admissible dans les cellules. Dans le cas du zinc, on opère de préférence à un pH compris entre environ 4,5 et 6,5.

Pour le reste, l'électrodialyse proprement dite est conduite de façon connue en soi, selon des procédures et dans les appareillages classiques.

De même, l'étape finale de distillation de la solution dessalée, constituée essentiellement d'eau et du solvant polaire aprotique à récupérer, peut être réalisée de façon tout-à -fait conventionnelle.

Les exemples suivants illustrent l'invention sans la limiter.

### EXEMPLE 1

**a)** Pour dessaler une solution (pH=10, 3 ; conductivité = 15,9 mS/cm) composée de 600 g d'eau, 300 g de DMSO, 39,5 g d'acétate de zinc dihydraté, 125 g d'ammoniaque à 28 % et 5 g de sulfate d'ammonium, on a utilisé un électrodialyseur SRTI type P1, muni de membranes AMV/CMV d'ASAHI GLASS et comprenant 20 cellules de 69 cm² utiles chacune, la tension appliquée aux bornes de l'électrodialyseur étant de 30 volts (soit 1,5 volt par cellule).
   L'électrodialyseur comporte trois cuves :
   - une cuve produit dans laquelle on place la solution à dessaler,
   - une cuve pour la saumure qui va s'enrichir en sels et qui consiste au départ en une solution de 5 g de NaCl dans 1000 g d'eau, acidifiée à pH = 4,9 au moyen d'HCl (conductivité = 8,83 mS/cm),
   - une cuve électrolyte contenant une solution de 12 g de NaCl dans 1200 g d'eau pour le rinçage des électrodes en graphite.

   Pendant la durée du dessalement (42 minutes), le pH de la saumure a été maintenu à 5 par addition de HCl. L'électrodialyse s'est déroulée sans qu'il soit noté d'apparition d'un précipité d'hydroxyde de zinc et on a obtenu une solution dessalée (pH = 11,2 ; conductivité = 0,29 mS/cm) dont la teneur en zinc a été réduite d'un facteur 100. La quasi-totalité des sels a été transférée dans la saumure finale (pH = 5,0 ; conductivité = 81,3 mS/cm).
**b)** En répétant la même opération sans addition de HCl, le pH de la saumure augmente rapidement et, après 5 minutes d'électrodialyse, on constate l'apparition d'un trouble dans les compartiments saumure, ce qui oblige à arrêter l'opération par sécurité (bas débit et pression élevée)

### EXEMPLE 2

On opère comme à l'exemple 1-a sauf qu'on remplace le DMSO par la même quantité de DMF. Les résultats sont rassemblés dans le tableau suivant. Il n'apparaît de précipité dans aucun des compartiments pendant la durée de l'opération.

| **TEMPS (Min)** | **PRODUIT** | | | **SAUMURE** | | **ELECTROLYTE** | |
|---|---|---|---|---|---|---|---|
| | % Zn | pH | Conductivité (mScm⁻¹) | pH | Conductivité (mScm⁻¹) | pH | Conductivité (mScm⁻¹) |
| 0 | 1,1 | 11,0 | 12,51 | 6 | 8,46 | 7,2 | 12,6 |
| 41 | 0,0102 | 11,4 | 0,88 | 4,86 | 88,7 | 7,9 | 12,1 |

### EXEMPLE 3

On opère comme à l'exemple 1-a, mais en remplaçant le DMSO par la même quantité de NMP. Il n'apparaît de précipité dans aucun des compartiments pendant la durée de l'expérience dont les résultats sont rassemblés dans le tableau suivant.

| **TEMPS (Min)** | **PRODUIT** | | | **SAUMURE** | | **ELECTROLYTE** | |
|---|---|---|---|---|---|---|---|
| | % Zn | pH | Conductivité (mScm⁻¹) | pH | Conductivité (mScm⁻¹) | pH | Conductivité (mScm⁻¹) |
| 0 | 1,1 | 11,0 | 12,56 | 6 | 10,97 | 7,4 | 14,54 |
| 37 | 0,0196 | 11,3 | 0,441 | 4,9 | 86,3 | 7,7 | 12,18 |

### EXEMPLE 4

Pour dessaler une solution aqueuse (pH = 11 ; conductivité = 15,9 mScm⁻¹) contenant 30 % en poids de DMSO, 1,62 % de zinc, 32 g/l de NH₃ et 35,4 g/l de CH₃COOH, on a utilisé un électrodialyseur AQUALYZER CORNING P 170 équipé de membranes AMV/CMV d'ASAHI GLASS et comprenant 300 cellules de 6,9 m² utiles, la tension appliquée aux bornes de l'électrodialyseur étant de 110-130 volts.

La cuve saumure contenant initialement une solution aqueuse à 5 g/l de NaCl (pH ajusté à 4,5 au moyen d'HCl) est alimentée en eau pour maintenir une résistivité constante et en HCl pour maintenir le pH entre 4 et 6. Par déversement, la cuve saumure alimente le circuit électrolyte servant à l'irrigation des électrodes.

Dans les conditions de fonctionnements indiquées ci-dessous, on a obtenu un ratio de dessalement sur le zinc de 1/100 sans aucun problème de colmatage dans les cellules.

### Paramètres de conduite d'exploitation

. Cuve produit à dessaler
   - résistivité initiale : 58 ohm.cm
   - consigne de résistivité limite : 500 ohm.cm
   - pH en sortie de dialyse : environ 11
   - poids unitaire de traitement : 18 kg/cycle
. Cuve saumure
   - température : environ 42°C
   - consigne de résistivité : environ 25 ohm.cm
   - pH compris entre 4 et 6 (par addition de HCl 33 %)
   - débit d'alimentation en eau de dessalement : 50-70 kg/h
   - volume permanent du bain (électrolyte + saumure) : environ 120 l
   - débit de recirculation dans les cellules : environ 1,5 m³/h
   - pression relative admissible : environ 1,7 bar
   - débit de saumure soutiré en continu : 50-70 kg/h

### Données électriques (en régime établi)

- ampérage : environ 5 A
- tension aux électrodes : 100 à 125 volts

## Revendications

1. Procédé de récupération d'un solvant polaire aprotique à partir d'une solution aqueuse saline basique de ce solvant, consistant à dessaler ladite solution par électrodialyse et ensuite à distiller la solution dessalée, caractérisé en ce que, durant l'étape d'électrodialyse, on maintient le pH de la saumure à une valeur comprise entre 1 et 7.

2. Procédé selon la revendication 1, dans lequel le solvant polaire aprotique est le diméthylsulfoxyde, la N-méthylpyrrolidone ou le diméthylformamide.

3. Procédé selon la revendication 1 ou 2, dans lequel la solution à dessaler comprend en poids 0,5 à 80 % de solvant polaire aprotique, 20 à 99,5 % d'eau et jusqu'à 10 % de sels minéraux dissous.

4. Procédé selon l'une des revendications 1 à 3, dans lequel le maintien du pH de la saumure entre 1 et 7 est effectué par addition d'acide chlorhydrique.

5. Procédé selon l'une des revendications 1 à 4, dans lequel le pH de la saumure est maintenu entre environ 4,5 et 6,5.

## Claims

1. Process for recovery of an aprotic polar solvent from an alkaline saline aqueous solution of this solvent, consisting in desalting the said solution by electrodialysis and then in distilling the desalted solution, characterised in that, during the electrodialysis stage, the pH of the brine is kept at a value between 1 and 7.

2. Process according to Claim 1, in which the aprotic polar solvent is dimethyl sulphoxide, N-methyl-pyrrolidone or dimethylformamide.

3. Process according to Claim 1 or 2, in which the solution to be desalted comprises by weight 0.5 to 80 % of aprotic polar solvent, 20 to 99.5 % of water and up to 10 % of dissolved inorganic salts.

4. Process according to one of Claims 1 to 3, in which keeping the pH of the brine between 1 and 7 is carried out by adding hydrochloric acid.

5. Process according to one of Claims 1 to 4, in which the pH of the brine is kept between approximately 4.5 and 6.5.

## Patentansprüche

1. Verfahren zur Wiedergewinnung eines polaren aprotischen Lösungsmittels aus seiner wäßrigen basischen Salzlösung, bestehend aus der Entsalzung der Lösung durch Elektrodialyse und anschließender Destillation der entsalzten Lösung, dadurch gekennzeichnet, daß man während des Elektrodialyseschrittes den pH-Wert der Salzlösung auf einen Wert zwischen 1 und 7 hält.

2. Verfahren nach Anspruch 1, wobei das polare aprotische Lösungsmittel Dimethylsulfoxid, N-methylpyrrolidon oder Dimethylformamid ist.

3. Verfahren nach Anspruch 1 oder 2, wobei die zu entsalzende Lösung 0,5 bis 80 Gew.-% polares aprotisches Lösungsmittel, 20 bis 99,5 Gew.-% Wasser und bis zu 10 Gew.-% an gelösten Mineralsalzen enthält.

4. Verfahren nach einem der Ansprüche 1 bis 3, wobei man den pH-Wert der Salzlösung durch Zugabe von Salzsäure zwischen 1 und 7 hält.

5. Verfahren nach einem der Ansprüche 1 bis 4, wobei der pH-Wert der Salzlösung zwischen etwa 4,5 und 6,5 gehalten wird.
